# EUROPÄISCHE PATENTSCHRIFT

(11) **EP 4 049 431 B1**
(45) Veröffentlichungstag und Bekanntmachung des Hinweises auf die Patenterteilung: **30.07.2025**
(21) Anmeldenummer: 20828977.7
(22) Anmeldetag: 10.12.2020
(51) Int. Cl.: H04L 9/40, H04L 12/46, H04L 67/12

(54) **ÜBERTRAGUNGSVORRICHTUNG ZUM ÜBERTRAGEN VON DATEN**
TRANSMISSION DEVICE FOR TRANSMITTING DATA
DISPOSITIF DE TRANSMISSION POUR LA TRANSMISSION DE DONNÉES

(30) Priorität: 19.12.2019 DE 102019220248
(43) Veröffentlichungstag der Anmeldung: 31.08.2022
(73) Patentinhaber: Siemens Mobility GmbH, 81739 München (DE)
(72) Erfinder: FALK, Rainer, 85586 Poing (DE); OTTO, Christina, 81739 München (DE); PATZLAFF, Heiko, 80799 München (DE); WIMMER, Martin, 85579 Neubiberg (DE)
(74) Vertreter: Siemens Patent Attorneys
(86) Internationale Anmeldenummer: PCT/EP2020/085502
(87) Internationale Veröffentlichungsnummer: WO 2021/122293

(56) Entgegenhaltungen:
- EP-A1- 3 139 548
- EP-A1- 3 425 865
- WO-A2-2004/028107

## Beschreibung

Die vorliegende Erfindung betrifft eine Übertragungsvorrichtung zum Übertragen von Daten zwischen einem ersten Netzwerk und einem zweiten Netzwerk.

Zur sicheren Kommunikation zwischen einem sicherheitskritischen Netzwerk, wie beispielsweise einem Produktionsnetzwerk oder einem Bahnsicherungsnetzwerk, und einem offenen Netzwerk, wie beispielsweise einem lokalen Netzwerk oder dem Internet, werden herkömmlicherweise insbesondere Übertragungsvorrichtungen, wie Datendioden oder Firewalls, eingesetzt, um eine uni-direktionale Datenübertragung zwischen dem sicherheitskritischen Netzwerk und dem offenen Netzwerk zu ermöglichen. Diese Übertragungsvorrichtungen sind beispielsweise dazu eingerichtet sicherzustellen, dass von dem offenen Netzwerk keine beliebigen Daten an das sicherheitskritische Netzwerk übermittelt werden können und sind insbesondere ferner dazu eingerichtet, das sicherheitskritische Netzwerk vor Angriffen und Eindringversuchen (engl. "Intrusion attempts") zu schützen.

Ein Dokument EP 3 139 548 A1 schlägt ein Gateway mit einer Architektur vor, welche eine bi-direktionale Kommunikation zwischen Applikationen ermöglicht, die in unterschiedlichen Domänen beheimatet sind, und ein hohes Sicherheitsniveau an Schutz bietet.

Ein Dokument WO 2004/028107A2 betrifft ein Überwachungssystem zur Überwachung der Sicherheit netzwerkbasierte Datenübertragungen, mit einem Rechnersystem zur Ermittlung aus von wenigstens einem System zur Kontrolle von ersten Datenübertragungen zwischen einem ersten Netzwerk und einem zweiten Netzwerk enthaltenen ersten Daten, die jeweils einzelne der ersten Datenübertragungen charakterisieren, ob die Datenübertragungen vorgegebene erste Sicherheitsanforderungen erfüllen. Ein Dokument EP 3 425 865 A1 beschäftigt sich mit einer Übertragungsvorrichtung zur rückwirkungsfreien uni direktionale Übertragung von Daten von einer ersten Netzwerkzone in eine zweite Netzwerkzone zur Auswertung an einen abgesetzten Anwendungsserver.

Vor diesem Hintergrund besteht eine Aufgabe der vorliegenden Erfindung darin, eine verbesserte Übertragungsvorrichtung bereitzustellen. Die Erfindung ist in den beiliegenden unabhängigen Ansprüchen definiert. Gemäß einem ersten Aspekt wird eine Übertragungsvorrichtung zum Übertragen von Daten zwischen einem ersten Netzwerk und einem zweiten Netzwerk vorgeschlagen. Die Übertragungsvorrichtung weist einen ersten Netzwerk-Port zum Koppeln an das erste Netzwerk und einen zweiten Netzwerk-Port zum Koppeln an das zweite Netzwerk auf und umfasst ferner:
eine an dem ersten Netzwerk-Port verbundene erste Erkennungs-Einheit, die dazu eingerichtet ist, von dem ersten Netzwerk über den ersten Netzwerk-Port übertragene Daten zu empfangen und Anomalitäten an den empfangenen Daten zu erkennen, und
eine an dem zweiten Netzwerk-Port verbundene zweite Erkennungs-Einheit, die dazu eingerichtet ist, von dem zweiten Netzwerk über den zweiten Netzwerk-Port übertragene Daten zu empfangen und Anomalitäten an den empfangenen Daten zu erkennen.

Durch die bereitgestellte Übertragungsvorrichtung ist es möglich, von dem ersten Netzwerk aus zu der Übertragungsvorrichtung übertragene Daten, als auch von dem zweiten Netzwerk aus zu der Übertragungsvorrichtung übertragene Daten, mittels der ersten und der zweiten Erkennungs-Einheit zu überwachen und zu analysieren, um somit Anomalitäten in dem ersten und in dem zweiten Netzwerk zu erkennen. Gleichzeitig ermöglicht es die bereitgestellte Übertragungsvorrichtung, dass das erste Netzwerk von dem zweiten Netzwerk getrennt ist, um sicherzustellen, dass von dem zweiten Netzwerk keine beliebigen Daten an das erste Netzwerk übermittelt werden können.

Im Detail können in vorteilhafter Weise durch die Verwendung der ersten Erkennungs-Einheit Anomalitäten, wie Abweichungen in den von dem ersten Netzwerk zu der Übertragungsvorrichtung übertragenen Daten, erkannt werden, und gleichzeitig durch die Verwendung der zweiten Erkennungs-Einheit Anomalitäten, wie Angriffe oder Eindringversuche auf die Übertragungsvorrichtung von dem zweiten Netzwerk aus, erkannt werden, während gleichzeitig das erste Netzwerk von dem zweiten Netzwerk getrennt ist.

Dies führt zu einer zuverlässigen und optimierten Erkennung von Anomalitäten in dem ersten Netzwerk und in dem zweiten Netzwerk, womit die Sicherheit bei der Datenübertragung zwischen dem ersten Netzwerk und dem zweiten Netzwerk erhöht wird.

Ein Netzwerk-Port, wie der erste oder der zweite Netzwerk-Port, ist insbesondere als ein physikalischer Netzwerk-Port ausgebildet. Der physikalische Netzwerk-Port weist vorzugsweise eine RJ-45-Verbindung, eine M12-Verbindung oder eine Single-Pair-Ethernet-Verbindung auf, um jeweils mit dem ersten Netzwerk oder dem zweiten Netzwerk verbunden oder gekoppelt zu werden. Die Übertragungsvorrichtung kann beispielsweise weitere Netzwerk-Ports, zusätzlich zu dem ersten und dem zweiten Netzwerk-Port, umfassen. Auch kann der erste und/oder der zweite Netzwerk-Port ein Teil einer Netzwerkadresse sein, der die Zuordnung von TCP-Verbindungen ("Transmission Control Protocol") und UDP-Verbindungen ("User Datagram Protocol") und Datenpaketen zu Server und/oder Clients, die in dem ersten und/oder zweiten Netzwerk angeordnet sind, ermöglicht.

Eine Anomalität an den empfangenen Daten oder an aktuell empfangenen Daten liegt insbesondere dann vor, wenn die von dem ersten und/oder dem zweiten Netzwerk aktuell empfangenen Daten eine Unregelmäßigkeit oder eine Abweichung im Vergleich zu älteren empfangenen Daten aufweisen. Es ist weiterhin insbesondere möglich, dass die von dem ersten Netzwerk empfangenen Daten bezüglich einer Abweichung zu älteren empfangenen Daten untersucht werden, während die vom zweiten Netzwerk empfangenen Daten auf Übereinstimmung mit Angriffssignaturen untersucht werden. Dies ist vorteilhaft, wenn das erste Netzwerk vorzugsweise ein industrielles (Steuerungs-)Netzwerk ist, in dem feste Kommunikationsmuster vorliegen, und das zweite Netzwerk beispielsweise ein offenes oder öffentliches Netzwerk, wie dem Internet, mit vielfältigen oder sich ändernden Kommunikationsmustern ist.

Die Übertragungsvorrichtung umfasst insbesondere eine CPU ("Central Processing Unit"), in welcher die erste Erkennungs-Einheit und die zweite Erkennungs-Einheit implementiert sind. Die erste CPU und die zweite CPU sind insbesondere miteinander verbunden und weisen beispielsweise einen gemeinsamen Speicher, einen gemeinsamen Speicherbereich oder jeweils eine serielle Verbindung auf. Die jeweilige Einheit, zum Beispiel die erste Erkennungs-Einheit oder die zweite Erkennungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die Übertragungsvorrichtung dazu eingerichtet, die erste Erkennungs-Einheit und die zweite Erkennungs-Einheit parallel auszuführen.

Diese Ausführungsform hat den Vorteil, dass die erste und die zweite Erkennungs-Einheit gleichzeitig oder parallel ausgeführt werden oder gleichzeitig aktiv oder im Betrieb sind.

Dies führt zu einer zuverlässigen und optimierten Erkennung von Anomalitäten in dem ersten Netzwerk und in dem zweiten Netzwerk, womit die Sicherheit bei der Datenübertragung zwischen dem ersten Netzwerk und dem zweiten Netzwerk erhöht wird.

Unter parallel wird insbesondere verstanden, dass die Übertragungsvorrichtung dazu eingerichtet ist, die erste Erkennungs-Einheit und die zweite Erkennungs-Einheit gleichzeitig, zeitgleich, zur selben Zeit oder simultan auszuführen oder zu betreiben.

Ferner ist die erste Erkennungs-Einheit dazu eingerichtet, bei einem Erkennen von Anomalitäten an den empfangenen Daten ein erstes Erkennungssignal zumindest an die zweite Erkennungs-Einheit zu übertragen, und die zweite Erkennungs-Einheit ist dazu eingerichtet, bei einem Erkennen von Anomalitäten an den empfangenen Daten ein zweites Erkennungssignal zumindest an die erste Erkennungs-Einheit zu übertragen.

Diese Ausführungsform ermöglicht es, dass die erste Erkennungs-Einheit der zweiten Erkennungs-Einheit mittels des ersten Erkennungssignals signalisieren kann, wenn in den von der ersten Erkennungs-Einheit empfangenen Daten eine Anomalität erkannt wird. Umgekehrt kann die zweite Erkennungs-Einheit der ersten Erkennungs-Einheit mittels des zweiten Erkennungssignals signalisieren, wenn in den von der zweiten Erkennungs-Einheit empfangenen Daten eine Anomalität erkannt wird.

Somit ist es in vorteilhafter Weise möglich, dass die erste und die zweite Erkennungs-Einheit sich gegenseitig darüber informieren können, wenn in einer und/oder in beiden Erkennungs-Einheiten eine Anomalität auftritt. Dies führt zu einer zuverlässigen und optimierten Erkennung von Anomalitäten in dem ersten Netzwerk und in dem zweiten Netzwerk, womit die Sicherheit bei der Datenübertragung zwischen dem ersten Netzwerk und dem zweiten Netzwerk erhöht wird.

Ein Erkennungssignal, wie das erste oder das zweite Erkennungssignal, ist insbesondere als eine Nachricht ausgebildet. Die Nachricht kann in Abhängigkeit der jeweiligen Erkennungs-Einheit an die Übertragungsvorrichtung, die erste Erkennungs-Einheit, die zweite Erkennungs-Einheit und/oder einen Computer, wie einen Server oder einen Client, der mit der Übertragungsvorrichtung verbunden ist, übertragen werden.

Gemäß einer weiteren Ausführungsform umfassen die von der ersten Erkennungs-Einheit erkennbaren Anomalitäten einen ersten Anomalitätstyp und die von der zweiten Erkennungs-Einheit erkennbaren Anomalitäten einen zweiten Anomalitätstyp, wobei sich der erste Anomalitätstyp von dem zweiten Anomalitätstyp unterscheidet.

Gemäß einer weiteren Ausführungsform ist die erste Erkennungs-Einheit dazu eingerichtet, den ersten Anomalitätstyp zu erkennen, wenn anhand der von dem ersten Netzwerk empfangenen Daten zumindest ein neuer Endpunkt und/oder eine Abweichung einer Netzwerktopologie in dem ersten Netzwerk ableitbar ist, und die zweite Erkennungs-Einheit ist dazu eingerichtet, den zweiten Anomalitätstyp zu erkennen, wenn anhand der von dem zweiten Netzwerk empfangenen Daten zumindest ein Angriff von dem zweiten Netzwerk über den zweiten Netzwerk-Port auf die zweite Erkennungs-Einheit ableitbar ist.

Vorteilhafterweise ist es durch die erste und die zweite Erkennungs-Einheit möglich, unterschiedliche Anomalitätstypen, wie den ersten und den zweiten Anomalitätstyp, zu erkennen. Dies führt zu einer zuverlässigen und optimierten Erkennung von Anomalitäten in dem ersten Netzwerk und in dem zweiten Netzwerk, womit die Sicherheit bei der Datenübertragung zwischen dem ersten Netzwerk und dem zweiten Netzwerk erhöht wird.

Ein Endpunkt oder ein neuer Endpunkt ist insbesondere ein Teilnehmer des ersten Netzwerkes und/oder des zweiten Netzwerkes. Ein Teilnehmer ist beispielsweise ein Computer, wie ein Server, ein Client oder ein Router.

Die Abweichung ist insbesondere dann vorhanden, wenn ein Vergleich einer älteren Netzwerktopologie des ersten Netzwerkes mit einer aktuellen Netzwerktopologie des ersten Netzwerkes ergibt, dass bestimmte Teilnehmer in der älteren Netzwerktopologie, im Vergleich zu der aktuellen Netzwerktopologie, beispielsweise entfernt oder hinzugefügt wurden oder sich ihr Zustand verändert hat.

Die Ableitung des ersten und des zweiten Anomalitätstyps erfolgt insbesondere durch eine Schwellwertbildung an den jeweils von der jeweiligen Erkennungs-Einheit empfangenen Daten. Ferner kann die Ableitung durch eine Festlegung zumindest eines Intervalls erfolgen, in welchem angegeben wird, welche erhaltene Abweichung noch zulässig ist.

Vorzugsweise wird der Angriff dadurch abgeleitet, dass bei dem Angriff oder bereits vor dem Angriff eine Abweichung vorliegt, die darauf schließen lässt, dass ein Angriff oder ein Angriffsversuch stattgefunden hat oder derzeit stattfindet. Der Angriff ist beispielsweise aus einer Abweichung an den von dem zweiten Netzwerk empfangenen Daten ableitbar. Der Angriff kann ein Software-Angriff, insbesondere ein Hacker-Angriff sein. Ein Software-Angriff ist insbesondere ein Angriff auf die zweite Erkennungs-Einheit über den zweiten Netzwerk-Port von dem zweiten Netzwerk aus. Der Angriff kann auch einen Angriffsversuch und/oder einen Eindringversuch auf die Übertragungsvorrichtung umfassen. Die Übertragungsvorrichtung ist insbesondere dazu eingerichtet, das erste Netzwerk an das zweite Netzwerk anzubinden. Vorzugsweise wird mit der ersten Erkennungs-Einheit der Übertragungsvorrichtung einerseits der Zustand oder die Daten des ersten Netzwerkes überwacht, während andererseits mit der zweiten Erkennungs-Einheit der Übertragungsvorrichtung Angriffe oder Eindringversuche von dem zweiten Netzwerk aus auf die Übertragungsvorrichtung erkannt werden können.

Gemäß einer weiteren Ausführungsform ist die Übertragungsvorrichtung dazu eingerichtet, über einen zwischen dem ersten Netzwerk und dem ersten Netzwerk-Port angeordneten Netzwerk-Switch die Daten von dem ersten Netzwerk zu empfangen, wobei zumindest ein Eingang des Netzwerk-Switches zur Übertragung von Daten mit dem ersten Netzwerk verbunden ist und ein als ein Ausgang des Netzwerk-Switches ausgebildeter Spiegelungs-Port zur Übertragung von Daten mit dem ersten Netzwerk-Port verbunden ist.

Durch die Verwendung eines Netzwerk-Switches mit Spiegelungs-Port (engl. "mirror port") ist es in vorteilhafter Weise möglich, den gesamten Datenverkehr des ersten Netzwerkes an dem ersten Netzwerk-Port für die Übertragungsvorrichtung bereitzustellen. Dadurch wird es in vorteilhafter Weise der Übertragungsvorrichtung ermöglicht, den Datenverkehr jedes Teilnehmers des ersten Netzwerkes zu erhalten, zu überwachen und zu analysieren. Dadurch erhöht sich die Zuverlässigkeit bei der Erkennung einer Anomalität in dem ersten Netzwerk und damit die Sicherheit bei der Verarbeitung von Daten in dem ersten Netzwerk und der Übertragungsvorrichtung.

Insbesondere ist zwischen dem ersten Netzwerk und dem Netzwerk-Switch ein erster Verbindungsabschnitt, zwischen dem Netzwerk-Switch und der Übertragungsvorrichtung ein zweiter Verbindungsabschnitt und zwischen der Übertragungsvorrichtung und dem zweiten Netzwerk ein dritter Verbindungsabschnitt angeordnet. Der erste Verbindungsabschnitt stellt insbesondere eine Verbindung zwischen dem ersten Netzwerk und dem Netzwerk-Switch her. Der zweite Verbindungsabschnitt stellt vorzugsweise eine Verbindung zwischen dem Netzwerk-Switch und der Übertragungsvorrichtung her. Der dritte Verbindungsabschnitt stellt beispielsweise eine Verbindung zwischen dem zweiten Netzwerk und der Übertragungsvorrichtung her. Der erste, zweite und/oder dritte Verbindungsabschnitt ist insbesondere drahtgebunden, beispielsweise in Form zumindest einer Kupferleitung oder einer Aluminiumleitung, und/oder optisch in Form zumindest einer Glasfaserleitung ausgebildet. Der Netzwerk-Switch ist insbesondere als ein Switch ausgebildet.

Der Spiegelungs-Port des Netzwerk-Switches dient insbesondere dazu, den Netzwerkverkehr des ersten Netzwerkes zu spiegeln, um damit den gesamten Daten- und/oder Netzwerkverkehr des ersten Netzwerkes der Übertragungsvorrichtung an dem ersten Netzwerk-Port bereitzustellen.

Gemäß einer weiteren Ausführungsform umfasst die Übertragungsvorrichtung ferner eine erste CPU, in welcher die erste Erkennungs-Einheit implementiert ist, und eine zweite CPU, in welcher die zweite Erkennungs-Einheit implementiert ist.

Damit ist die erste CPU von der zweiten CPU physikalisch getrennt implementiert oder physikalisch isoliert von der zweiten CPU implementiert. Die erste CPU kann somit unabhängig von der zweiten CPU ausgeführt sein. Insbesondere weisen die erste CPU und die zweite CPU einen gemeinsamen Speicher, wie einen Dual-RAM ("Random Access Memory") und/oder eine gemeinsame serielle Verbindung, auf.

Dies hat den Vorteil, dass bei einem Angriff auf die zweite Erkennungs-Einheit eine Einflussnahme auf die erste Erkennungs-Einheit durch diesen Angriff verhindert wird, da die erste Erkennungs-Einheit auf einer von der zweiten CPU isolierten ersten CPU implementiert ist. Dies erhöht die Zuverlässigkeit bei einem Betrieb der Übertragungsvorrichtung, insbesondere bei dem Betrieb der ersten und der zweiten Erkennungs-Einheit, und erhöht damit die Sicherheit bei der Übertragung von Daten zwischen dem ersten und dem zweiten Netzwerk.

Die CPU, wie die erste CPU oder die zweite CPU, ist eine zentrale Verarbeitungseinheit oder auch ein Prozessor.

Gemäß einer weiteren Ausführungsform ist die Übertragungsvorrichtung dazu eingerichtet, dem zweiten Netzwerk eine Routing-Tabelle umfassend eine Mehrzahl A von IP-Adressen von Teilnehmern aus dem ersten Netzwerk bereitzustellen.

Die Routing-Tabelle ist insbesondere eine Tabelle, die Aufschluss darüber gibt, welche Teilnehmer eines Netzwerkes, wie dem ersten Netzwerk, über welche IP-Adressen erreichbar sind oder welche IP-Adressen den Teilnehmern zugeordnet sind. Damit hat ein anderes Netzwerk, wie das zweite Netzwerk, Informationen darüber, über welche IP-Adresse ein Teilnehmer des ersten Netzwerkes von dem zweiten Netzwerk aus erreichbar ist.

Gemäß einer weiteren Ausführungsform ist die Übertragungsvorrichtung dazu eingerichtet, dem zweiten Netzwerk zumindest eine bestimmte IP-Adresse eines bestimmten Teilnehmers aus dem ersten Netzwerk bereitzustellen.

Durch die bereitgestellte Routing-Tabelle wird zumindest eine bestimmte IP-Adresse eines bestimmten Teilnehmers aus dem ersten Netzwerk dem zweiten Netzwerk bereitgestellt.

Diese bereitgestellte bestimmte IP-Adresse wird in vorteilhafter Weise insbesondere als eine Falle, die einen technischen Endpunkt aufweist, verwendet. Die Falle kann auch mit dem englischen Begriff "Honeypot" bezeichnet werden. Falls insbesondere komplette Netzsegmente mit mehreren Teilnehmern des ersten Netzwerkes vorgetäuscht werden, kann dies als ein "Honeynet" bezeichnet werden. Wenn beispielsweise ein Angreifer über die Übertragungsvorrichtung und/oder die zweite Erkennungs-Einheit den bestimmten Teilnehmer mittels der ihm zugeordneten bestimmten IP-Adresse angreifen will, endet der Angriff in dem technischen Endpunkt. Der technische Endpunkt ist insbesondere von dem ersten und zweiten Netzwerk isoliert ausgebildet. Somit wird eine gezielte Irreführung des Angreifers mittels der bestimmten IP-Adresse und der Routing-Tabelle bewirkt, um die Sicherheit und die Zuverlässigkeit bei dem Betreiben der Übertragungsvorrichtung und des ersten Netzwerkes zu erhöhen.

Gemäß einer weiteren Ausführungsform ist die Übertragungsvorrichtung dazu eingerichtet, eine Übertragung von Daten zwischen dem ersten Netzwerk und dem zweiten Netzwerk in einer Übertragungsschicht, Schicht 2 gemäß dem OSI/ISO-Schichtmodell, durchzuführen.

Gemäß einer weiteren Ausführungsform umfassen die erste Erkennungs-Einheit und die zweite Erkennungs-Einheit jeweils ein Intrusion-Detektion-System.

Das Intrusion-Detektion-System (engl. "Intrusion Detection System" (IDS)) ist insbesondere eine Sicherheitstechnologie, die das unbefugte Eindringen in ein Netzwerk erkennt, wenn beispielsweise Schadsoftware mithilfe sogenannter Exploit-Codes Sicherheitslücken eines Systems ausnutzt. Das Intrusion-Detektion-System umfasst insbesondere ein Netzwerk-Intrusion-Detektion-System (NIDS). Mittels eines IDS oder eines NIDS kann das betreffende Netzwerk, beispielsweise das erste Netzwerk und/oder das zweite Netzwerk, kontrolliert und effektiv nach Anomalitäten abgesucht werden.

Gemäß einer weiteren Ausführungsform umfasst das erste Netzwerk ein Steuerungsnetzwerk, insbesondere ein Produktionsnetzwerk oder ein Bahnsicherungsnetzwerk, und das zweite Netzwerk ein Diagnosenetzwerk, ein lokales Netzwerk oder das Internet.

Das erste Netzwerk ist insbesondere als ein sicherheitskritisches Netzwerk, während das zweite Netzwerk als ein offenes Netzwerk ausgebildet ist. Auch kann das erste Netzwerk als ein Netzwerk mit einer hohen Sicherheitsanforderung bezeichnet werden, während das zweite Netzwerk als ein Netzwerk mit geringer Sicherheitsanforderung bezeichnet wird.

Ein Produktionsnetzwerk wird insbesondere in einer Produktionsanlage verwendet. Die Produktionsanlage umfasst insbesondere mehrere über das Produktionsnetzwerk miteinander verbundene Maschinen und Computer.

Ein Bahnsicherungsnetzwerk umfasst vorzugsweise Leit- und Sicherheitstechnik für eine Schieneninfrastruktur.

Das Steuerungsnetzwerk umfasst ferner insbesondere ein Straßensicherungsnetzwerk, welches Leit- und Sicherheitstechnik für eine Straßeninfrastruktur aufweist.

Ein lokales Netzwerk umfasst beispielsweise ein LAN ("Local Area Network") und/oder ein WLAN ("Wireless Local Area Network").

Das erste Netzwerk und das zweite Netzwerk umfassen jeweils insbesondere zumindest einen Endpunkt, welcher als ein jeweiliger Teilnehmer ausgebildet ist. Das erste Netzwerk und/oder das zweite Netzwerk umfassen insbesondere jeweils mehrere Teilnehmer, die miteinander verbunden sind und dadurch das jeweilige Netzwerk ausbilden.

Gemäß einer weiteren Ausführungsform ist die Übertragungsvorrichtung teilweise oder vollständig als eine unidirektionale Datendiode, als eine Firewall oder als ein Gateway ausgebildet.

Eine unidirektionale Datendiode ist insbesondere eine Einweg-Kommunikationseinrichtung, die eine physikalisch rückwirkungsfreie Trennung des ersten Netzwerkes und des zweiten Netzwerkes ermöglicht. Insbesondere ist die unidirektionale Datendiode als eine "Data Capture Unit" (DCU) ausgebildet. Eine "physikalisch" rückwirkungsfreie Trennung liegt insbesondere dann vor, wenn die rückwirkungsfreie Trennung aufgrund von physikalischen Bauelementen in der unidirektionalen Datendiode das erste und das zweite Netzwerk physikalisch trennt.

Eine Firewall ist insbesondere eine Komponente, welche in Hard- und/oder Software, insbesondere in Software, implementiert ist und welche dazu eingerichtet ist, zwischen einem ersten und einem zweiten Netzwerk eine Verbindung herzustellen. Die Firewall kann ebenso als eine unidirektionale Firewall ausgebildet sein, welche eine logisch rückwirkungsfreie Trennung des ersten Netzwerkes und des zweiten Netzwerkes ermöglicht. Unter dem Begriff einer "logisch" rückwirkungsfreien Trennung wird insbesondere vorliegend verstanden, wenn die rückwirkungsfreie Trennung mittels einer Anwendung von Algorithmen erfolgt, in dem Fall, wenn die Firewall in Software implementiert ist.

Ein Gateway ist insbesondere eine Komponente, welche in Hard- und/oder Software implementiert ist und welche dazu eingerichtet ist, zwischen einem ersten und einem zweiten Netzwerk eine Verbindung herzustellen. Das Gateway kann ebenso als ein uni-direktionales Gateway ausgebildet sein, welches eine physikalisch oder logisch rückwirkungsfreie Trennung des ersten Netzwerkes und des zweiten Netzwerkes ermöglicht.

Weiterhin ist jeweils insbesondere die unidirektionale Datendiode, die unidirektionale Firewall und das unidirektionale Gateway dazu eingerichtet, nur freigegebene und/oder speziell markierte Daten für die Übertragung aus dem zweiten Netzwerk in das erste Netzwerk zuzulassen.

Unter dem Begriff einer "rückwirkungsfreien Trennung" wird insbesondere verstanden, dass Änderungen oder Angriffe in dem zweiten Netzwerk eine Einflussnahme auf das erste Netzwerk verhindern.

Unter dem Begriff "teilweise" wird vorliegend insbesondere verstanden, dass die Übertragungsvorrichtung noch weitere Komponenten zusätzlich zu der unidirektionale Datendiode, der Firewall oder dem Gateway umfasst. Beispielsweise ist die uni-direktionale Datendiode Teil der Übertragungsvorrichtung, wobei die Übertragungsvorrichtung noch weitere Komponenten aufweist.

Unter dem Begriff "vollständig" wird vorliegend insbesondere verstanden, dass die Übertragungsvorrichtung in ihrer Gesamtheit als eine unidirektionale Datendiode, als eine Firewall oder als ein Gateway ausgebildet ist.

Gemäß einer weiteren Ausführungsform ist das Gateway zwischen der ersten Erkennungs-Einheit und der zweiten Erkennungs-Einheit angeordnet, und ein Eingang der ersten Erkennungs-Einheit mit einem externen Netzwerk-Switch und ein Ausgang der ersten Erkennungs-Einheit mit dem Gateway verbunden, wobei das Gateway ferner dazu eingerichtet ist, über eine interne IP-Adresse der ersten Erkennungs-Einheit mit der ersten Erkennungs-Einheit zu kommunizieren, wobei ein Eingang der zweiten Erkennungs-Einheit mit dem Gateway und ein Ausgang der zweiten Erkennungs-Einheit mit dem zweiten Netzwerk verbunden ist.

Gemäß einer weiteren Ausführungsform sind zumindest die erste Erkennungs-Einheit, die zweite Erkennungs-Einheit, der erste Netzwerk-Port und der zweite Netzwerk-Port in einem gemeinsamen Gehäuse implementiert.

Somit sind die in dieser Ausführungsform aufgeführten Komponenten inklusive der Übertragungsvorrichtung selbst insbesondere in einem gemeinsamen Gehäuse implementiert.

Ein Gehäuse oder ein gemeinsames Gehäuse ist insbesondere als ein Gehäuse eines Prozessors oder eines Computerchips, beispielsweise in Form eines integrierten Schaltkreises (engl. "Integrated Circuit" (IC)) ausgebildet. Ferner ist ein Gehäuse oder ein gemeinsames Gehäuse vorzugsweise als ein gemeinsames Gehäuse eines Gerätes oder beispielsweise als eine gemeinsame Implementierung auf einem FPGA (engl. "Field Programmable Gate Array") ausgebildet.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagram eines ersten Ausführungsbeispiels einer Übertragungsvorrichtung zum Übertragen von Daten; und
- Fig. 2: zeigt ein schematisches Blockdiagram eines zweiten Ausführungsbeispiels einer Übertragungsvorrichtung zum Übertragen von Daten.

In den Figuren sind gleiche oder funktionsgleiche Elemente mit denselben Bezugszeichen versehen worden, sofern nichts anderes angegeben ist.

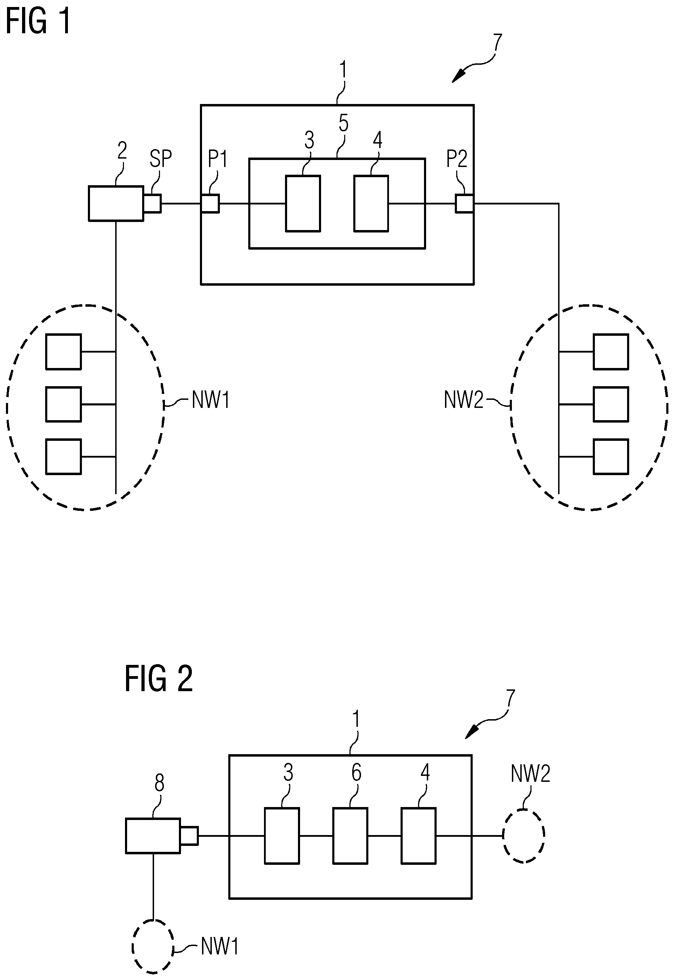

Fig. 1 zeigt ein schematisches Blockdiagram eines ersten Ausführungsbeispiels einer Übertragungsvorrichtung 1 zum Übertragen von Daten zwischen einem ersten Netzwerk NW1, beispielsweise umfassend ein Produktionsnetzwerk, und einem zweiten Netzwerk NW2, beispielsweise umfassend ein lokales Netzwerk. Diese Übertragung von Daten wird insbesondere in einer Übertragungsschicht, Schicht 2 gemäß dem OSI/ISO-Schichtmodell, durchgeführt. In einer weiteren Ausführungsform kann das erste Netzwerk NW1 ein Bahnsicherungsnetzwerk umfassen, während das zweite Netzwerk NW2 das Internet umfasst.

Die Übertragungsvorrichtung 1 ist in der ersten Ausführungsform vollständig als eine unidirektionale Datendiode ausgebildet. In einer weiteren Ausführungsform kann die Übertragungsvorrichtung 1 teilweise oder vollständig als eine Firewall (nicht gezeigt) oder als ein Gateway 6 (siehe Fig. 2) ausgebildet sein.

Die Übertragungsvorrichtung 1 weist einen ersten Netzwerk-Port P1 zum Koppeln an das erste Netzwerk NW1 und einen zweiten Netzwerk-Port P2 zum Koppeln an das zweite Netzwerk NW2 auf. Ferner umfasst die Übertragungsvorrichtung 1 eine erste Erkennungs-Einheit 3 sowie eine zweite Erkennungs-Einheit 4. In der ersten Ausführungsform sind die Übertragungsvorrichtung 1 umfassend die erste Erkennungs-Einheit 3, die zweite Erkennungs-Einheit 4, der erste Netzwerk-Port P1 und der zweite Netzwerk-Port P2 in einem gemeinsamen Gehäuse 7 implementiert.

Die erste Erkennungs-Einheit 3 ist an dem ersten Netzwerk-Port P1 verbunden und ist dazu eingerichtet, von dem ersten Netzwerk NW1 über den ersten Netzwerk-Port P1 übertragene Daten zu empfangen und Anomalitäten an den empfangenen Daten zu erkennen. Ferner ist die erste Erkennungs-Einheit 3 dazu eingerichtet, bei einem Erkennen von Anomalitäten an den empfangenen Daten ein erstes Erkennungssignal zumindest an die zweite Erkennungs-Einheit 4 zu übertragen.

Die zweite Erkennungs-Einheit 4 ist an dem zweiten Netzwerk-Port P2 verbunden und ist dazu eingerichtet, von dem zweiten Netzwerk NW2 über den zweiten Netzwerk-Port P2 übertragene Daten zu empfangen und Anomalitäten an den empfangenen Daten zu erkennen. Ferner ist die zweite Erkennungs-Einheit 4 dazu eingerichtet, bei einem Erkennen von Anomalitäten an den empfangenen Daten ein zweites Erkennungssignal zumindest an die erste Erkennungs-Einheit 3 zu übertragen.

Vorzugsweise ist die Übertragungsvorrichtung 1 dazu eingerichtet, die erste Erkennungs-Einheit 3 und die zweite Erkennungs-Einheit 4 parallel auszuführen. Ferner umfassen die erste und die zweite Erkennungs-Einheit 3, 4 jeweils insbesondere ein Intrusion-Detektion-System.

Die von der ersten Erkennungs-Einheit 3 erkennbaren Anomalitäten umfassen insbesondere einen ersten Anomalitätstyp, wobei die erste Erkennungs-Einheit 3 dazu eingerichtet ist, den ersten Anomalitätstyp zu erkennen, wenn anhand der von dem ersten Netzwerk NW1 empfangenen Daten zumindest ein neuer Endpunkt oder eine Abweichung einer Netzwerktopologie in dem ersten Netzwerk NW1 ableitbar ist.

Insbesondere umfassen die von der zweiten Erkennungs-Einheit 4 erkennbaren Anomalitäten einen zweiten Anomalitätstyp, wobei die zweite Erkennungs-Einheit 4 dazu eingerichtet ist, den zweiten Anomalitätstyp zu erkennen, wenn anhand der von dem zweiten Netzwerk NW2 empfangenen Daten zumindest ein Angriff von dem zweiten Netzwerk NW2 über den zweiten Netzwerk-Port P2 auf die zweite Erkennungs-Einheit 4 ableitbar ist.

Infolgedessen unterscheidet sich der erste Anomalitätstyp insbesondere von dem zweiten Anomalitätstyp.

In Fig. 1 ist ferner zwischen dem ersten Netzwerk NW1 und dem ersten Netzwerk-Port P1 ein Netzwerk-Switch 2 angeordnet.

Die Übertragungsvorrichtung 1 ist hierbei dazu eingerichtet, über den Netzwerk-Switch 2 die Daten von dem ersten Netzwerk NW1 zu empfangen. Zumindest ein Eingang des Netzwerk-Switches 2 ist zur Übertragung von Daten mit dem ersten Netzwerk NW1 verbunden. Ein als ein Ausgang des Netzwerk-Switches 2 ausgebildeter Spiegelungs-Port SP zur Übertragung von Daten ist mit dem ersten Netzwerk-Port P1 verbunden.

In einer weiteren Ausführungsform umfasst die Übertragungsvorrichtung 1 eine erste CPU, in welcher die erste Erkennungs-Einheit 3 implementiert ist, und eine zweite CPU, in welcher die zweite Erkennungs-Einheit 4 implementiert ist. Vorzugsweise ist die Übertragungsvorrichtung 1 dazu eingerichtet, dem zweiten Netzwerk NW2 eine Routing-Tabelle umfassend eine Mehrzahl A von IP-Adressen von Teilnehmern aus dem ersten Netzwerk NW1 bereitzustellen. Die Übertragungsvorrichtung 1 ist ferner dazu eingerichtet, dem zweiten Netzwerk NW2 zumindest eine bestimmte IP-Adresse eines bestimmten Teilnehmers aus dem ersten Netzwerk NW1 bereitzustellen.

Fig. 2 zeigt ein schematisches Blockdiagram eines zweiten Ausführungsbeispiels einer Übertragungsvorrichtung 1 zum Übertragen von Daten. Hierbei umfasst die Übertragungsvorrichtung 1 ein Gateway 6. In der zweiten Ausführungsform sind die Übertragungsvorrichtung 1 umfassend die erste Erkennungs-Einheit 3, die zweite Erkennungs-Einheit 4 und das Gateway 6 in einem gemeinsamen Gehäuse 7 implementiert.

Das Gateway 6 ist insbesondere zwischen der ersten Erkennungs-Einheit 3 und der zweiten Erkennungs-Einheit 4 angeordnet.

Ein Eingang der ersten Erkennungs-Einheit 3 ist mit einem externen Netzwerk-Switch 8 und ein Ausgang der ersten Erkennungs-Einheit 3 ist mit dem Gateway 6 verbunden. Das Gateway 6 ist hierbei dazu eingerichtet, über eine interne IP-Adresse der ersten Erkennungs-Einheit 3 mit der ersten Erkennungs-Einheit 3 zu kommunizieren. Ein Eingang der zweiten Erkennungs-Einheit 4 ist mit dem Gateway 6 verbunden, während ein Ausgang der zweiten Erkennungs-Einheit 4 mit dem zweiten Netzwerk NW2 verbunden ist.

Obwohl die vorliegende Erfindung anhand von Ausführungsbeispielen beschrieben wurde, ist sie vielfältig modifizierbar.

## Patentansprüche

1. Übertragungsvorrichtung (1) zum Übertragen von Daten zwischen einem ersten Netzwerk (NW1) und einem zweiten Netzwerk (NW2), wobei die Übertragungsvorrichtung (1) einen ersten Netzwerk-Port (P1) zum Koppeln an das erste Netzwerk (NW1) und einen zweiten Netzwerk-Port (P2) zum Koppeln an das zweite Netzwerk (NW2) aufweist und ferner umfasst:
eine an dem ersten Netzwerk-Port (P1) verbundene erste Erkennungs-Einheit (3), die dazu eingerichtet ist, von dem ersten Netzwerk (NW1) über den ersten Netzwerk-Port (P1) übertragene Daten zu empfangen und Anomalitäten an den empfangenen Daten zu erkennen, und
eine an dem zweiten Netzwerk-Port (P2) verbundene zweite Erkennungs-Einheit (4), die dazu eingerichtet ist, von dem zweiten Netzwerk (NW2) über den zweiten Netzwerk-Port (P2) übertragene Daten zu empfangen und Anomalitäten an den empfangenen Daten zu erkennen, und
die erste Erkennungs-Einheit (3) dazu eingerichtet ist, bei einem Erkennen von Anomalitäten an den empfangenen Daten ein erstes Erkennungssignal zumindest an die zweite Erkennungs-Einheit (4) zu übertragen, und die zweite Erkennungs-Einheit (4) dazu eingerichtet ist, bei einem Erkennen von Anomalitäten an den empfangenen Daten ein zweites Erkennungssignal zumindest an die erste Erkennungs-Einheit (3) zu übertragen.

2. Übertragungsvorrichtung nach Anspruch 1,
**dadurch gekennzeichnet,**
**dass** die Übertragungsvorrichtung (1) dazu eingerichtet ist, die erste Erkennungs-Einheit (3) und die zweite Erkennungs-Einheit (4) parallel auszuführen.

3. Übertragungsvorrichtung nach einem der Ansprüche 1 - 2, **dadurch gekennzeichnet,**
**dass** die von der ersten Erkennungs-Einheit (3) erkennbaren Anomalitäten einen ersten Anomalitätstyp und die von der zweiten Erkennungs-Einheit (4) erkennbaren Anomalitäten einen zweiten Anomalitätstyp umfassen, wobei sich der erste Anomalitätstyp von dem zweiten Anomalitätstyp unterscheidet.

4. Übertragungsvorrichtung nach Anspruch 3,
**dadurch gekennzeichnet,**
**dass** die erste Erkennungs-Einheit (3) dazu eingerichtet ist, den ersten Anomalitätstyp zu erkennen, wenn anhand der von dem ersten Netzwerk (NW1) empfangenen Daten zumindest ein neuer Endpunkt und/oder eine Abweichung einer Netzwerktopologie in dem ersten Netzwerk (NW1) ableitbar ist, und die zweite Erkennungs-Einheit (4) dazu eingerichtet ist, den zweiten Anomalitätstyp zu erkennen, wenn anhand der von dem zweiten Netzwerk (NW2) empfangenen Daten zumindest ein Angriff von dem zweiten Netzwerk (NW2) über den zweiten Netzwerk-Port (P2) auf die zweite Erkennungs-Einheit (4) ableitbar ist.

5. Übertragungsvorrichtung nach einem der Ansprüche 1 - 4, **dadurch gekennzeichnet,**
**dass** die Übertragungsvorrichtung (1) dazu eingerichtet ist, über einen zwischen dem ersten Netzwerk (NW1) und dem ersten Netzwerk-Port (P1) angeordneten Netzwerk-Switch die Daten von dem ersten Netzwerk (NW1) zu empfangen, wobei zumindest ein Eingang des Netzwerk-Switches zur Übertragung von Daten mit dem ersten Netzwerk (NW1) verbunden ist und ein als ein Ausgang des Netzwerk-Switches ausgebildeter Spiegelungs-Port (SP) zur Übertragung von Daten mit dem ersten Netzwerk-Port (P1) verbunden ist.

6. Übertragungsvorrichtung nach einem der Ansprüche 1 - 5, **dadurch gekennzeichnet,**
**dass** die Übertragungsvorrichtung (1) ferner eine erste CPU, in welcher die erste Erkennungs-Einheit (3) implementiert ist, und eine zweite CPU, in welcher die zweite Erkennungs-Einheit (4) implementiert ist, umfasst.

7. Übertragungsvorrichtung nach einem der Ansprüche 1 - 6, **dadurch gekennzeichnet,**
**dass** die Übertragungsvorrichtung (1) dazu eingerichtet ist, dem zweiten Netzwerk (NW2) eine Routing-Tabelle umfassend eine Mehrzahl A von IP-Adressen von Teilnehmern aus dem ersten Netzwerk (NW1) bereitzustellen.

8. Übertragungsvorrichtung nach einem der Ansprüche 1 - 7, **dadurch gekennzeichnet,**
**dass** die Übertragungsvorrichtung (1) ferner dazu eingerichtet ist, dem zweiten Netzwerk (NW2) zumindest eine bestimmte IP-Adresse eines bestimmten Teilnehmers aus dem ersten Netzwerk (NW1) bereitzustellen.

9. Übertragungsvorrichtung nach einem der Ansprüche 1 - 8, **dadurch gekennzeichnet,**
**dass** die Übertragungsvorrichtung (1) dazu eingerichtet ist, eine Übertragung von Daten zwischen dem ersten Netzwerk (NW1) und dem zweiten Netzwerk (NW2) in einer Übertragungsschicht, Schicht 2 gemäß dem OSI/ISO-Schichtmodell, durchzuführen.

10. Übertragungsvorrichtung nach einem der Ansprüche 1 - 9, **dadurch gekennzeichnet,**
**dass** die erste Erkennungs-Einheit (3) und die zweite Erkennungs-Einheit (4) jeweils ein Intrusion-Detektion-System umfassen.

11. Übertragungsvorrichtung nach einem der Ansprüche 1 - 10, **dadurch gekennzeichnet,**
**dass** das erste Netzwerk (NW1) ein Steuerungsnetzwerk, insbesondere ein Produktionsnetzwerk oder ein Bahnsicherungsnetzwerk, umfasst und das zweite Netzwerk (NW2) ein Diagnosenetzwerk, ein lokales Netzwerk oder das Internet umfasst.

12. Übertragungsvorrichtung nach einem der Ansprüche 1 - 11, **dadurch gekennzeichnet,**
**dass** die Übertragungsvorrichtung (1) teilweise oder vollständig als eine unidirektionale Datendiode, als eine Firewall oder als ein Gateway ausgebildet ist.

13. Übertragungsvorrichtung nach Anspruch 12,
**dadurch gekennzeichnet,**
**dass** das Gateway zwischen der ersten Erkennungs-Einheit (3) und der zweiten Erkennungs-Einheit (4) angeordnet ist, und ein Eingang der ersten Erkennungs-Einheit (3) mit einem externen Netzwerk-Switch und ein Ausgang der ersten Erkennungs-Einheit (3) mit dem Gateway verbunden ist, wobei das Gateway ferner dazu eingerichtet ist, über eine interne IP-Adresse der ersten Erkennungs-Einheit (3) mit der ersten Erkennungs-Einheit (3) zu kommunizieren, wobei ein Eingang der zweiten Erkennungs-Einheit (4) mit dem Gateway und ein Ausgang der zweiten Erkennungs-Einheit (4) mit dem zweiten Netzwerk (NW2) verbunden ist.

14. Übertragungsvorrichtung nach einem der Ansprüche 1 - 13, **dadurch gekennzeichnet,**
**dass** zumindest die erste Erkennungs-Einheit (3), die zweite Erkennungs-Einheit (4), der erste Netzwerk-Port (P1) und der zweite Netzwerk-Port (P2) in einem gemeinsamen Gehäuse implementiert sind.

## Claims

1. Transmission device (1) for transmitting data between a first network (NW1) and a second network (NW2), wherein the transmission device (1) has a first network port (P1) for coupling to the first network (NW1) and a second network port (P2) for coupling to the second network (NW2) and also comprises:
a first detection unit (3) which is connected at the first network port (P1) and is configured to receive data transmitted from the first network (NW1) via the first network port (P1) and to detect anomalies in the received data, and
a second detection unit (4) which is connected at the second network port (P2) and is configured to receive data transmitted from the second network (NW2) via the second network port (P2) and to detect anomalies in the received data, and
the first detection unit (3) is configured to transmit a first detection signal at least to the second detection unit (4) when anomalies are detected in the received data, and the second detection unit (4) is configured to transmit a second detection signal at least to the first detection unit (3) when anomalies are detected in the received data.

2. Transmission device according to Claim 1,
**characterized**
**in that** the transmission device (1) is configured to execute the first detection unit (3) and the second detection unit (4) in a parallel manner.

3. Transmission device according to one of Claims 1-2, **characterized**
**in that** the anomalies which can be detected by the first detection unit (3) comprise a first anomaly type and the anomalies which can be detected by the second detection unit (4) comprise a second anomaly type, wherein the first anomaly type differs from the second anomaly type.

4. Transmission device according to Claim 3,
**characterized**
**in that** the first detection unit (3) is configured to detect the first anomaly type if, on the basis of the data received from the first network (NW1), it is possible to derive at least one new end point and/or a discrepancy of a network topology in the first network (NW1), and the second detection unit (4) is configured to detect the second anomaly type if, on the basis of the data received from the second network (NW2), it is possible to derive at least one attack on the second detection unit (4) from the second network (NW2) via the second network port (P2).

5. Transmission device according to one of Claims 1-4, **characterized**
**in that** the transmission device (1) is configured to receive the data from the first network (NW1) via a network switch arranged between the first network (NW1) and the first network port (P1), wherein at least one input of the network switch is connected to the first network (NW1) for the purpose of transmitting data and a mirror port (SP) in the form of an output of the network switch is connected to the first network port (P1) for the purpose of transmitting data.

6. Transmission device according to one of Claims 1-5, **characterized**
**in that** the transmission device (1) also comprises a first CPU, in which the first detection unit (3) is implemented, and a second CPU, in which the second detection unit (4) is implemented.

7. Transmission device according to one of Claims 1-6, **characterized**
**in that** the transmission device (1) is configured to provide the second network (NW2) with a routing table comprising a plurality A of IP addresses of subscribers from the first network (NW1).

8. Transmission device according to one of Claims 1-7, **characterized**
**in that** the transmission device (1) is also configured to provide the second network (NW2) with at least one particular IP address of a particular subscriber from the first network (NW1).

9. Transmission device according to one of Claims 1-8, **characterized**
**in that** the transmission device (1) is configured to transmit data between the first network (NW1) and the second network (NW2) in a data link layer, layer 2 according to the OSI/ISO layer model.

10. Transmission device according to one of Claims 1-9, **characterized**
**in that** the first detection unit (3) and the second detection unit (4) each comprise an intrusion detection system.

11. Transmission device according to one of Claims 1-10, **characterized**
**in that** the first network (NW1) comprises a control network, in particular a production network or a rail safety network, and the second network (NW2) comprises a diagnostic network, a local area network or the Internet.

12. Transmission device according to one of Claims 1-11, **characterized**
**in that** the transmission device (1) is partially or completely in the form of a unidirectional data diode, a firewall or a gateway.

13. Transmission device according to Claim 12,
**characterized**
**in that** the gateway is arranged between the first detection unit (3) and the second detection unit (4), and an input of the first detection unit (3) is connected to an external network switch and an output of the first detection unit (3) is connected to the gateway, wherein the gateway is also configured to communicate with the first detection unit (3) using an internal IP address of the first detection unit (3), wherein an input of the second detection unit (4) is connected to the gateway and an output of the second detection unit (4) is connected to the second network (NW2).

14. Transmission device according to one of Claims 1-13, **characterized**
**in that** at least the first detection unit (3), the second detection unit (4), the first network port (P1) and the second network port (P2) are implemented in a common housing.

## Revendications

1. Dispositif de transmission (1) pour transmettre des données entre un premier réseau (NW1) et un second réseau (NW2), où le dispositif de transmission (1) comporte un premier port réseau (P1) pour se coupler au premier réseau (NW1) et un second port réseau (P2) pour se coupler au second réseau (NW2), et comprend en outre :
une première unité de détection (3) reliée au premier port réseau (P1), installée pour recevoir des données transmises du premier réseau (NW1) via le premier port réseau (P1) et pour détecter des anomalies sur les données reçues, et
une seconde unité de détection (4) reliée au second port réseau (P2), installée pour recevoir des données transmises du second réseau (NW2) via le second port réseau (P2) et pour détecter des anomalies sur les données reçues, et
la première unité de détection (3) est conçue, en cas de détection d'anomalies sur les données reçues, pour transmettre un premier signal de détection au moins à la seconde unité de détection (4), et la seconde unité de détection (4) est conçue, en cas de détection d'anomalies sur les données reçues, pour transmettre un second signal de détection au moins à la première unité de détection (3).

2. Dispositif de transmission selon la revendication 1, **caractérisé en ce que**
le dispositif de transmission (1) est conçu pour lancer la première unité de détection (3) et la seconde unité de détection (4) en parallèle.

3. Dispositif de transmission selon l'une des revendications 1 à 2, **caractérisé en ce que**
les anomalies détectables par la première unité de détection (3) comprennent un premier type d'anomalie et les anomalies détectables par la seconde unité de détection (4) comprennent un second type d'anomalie, où le premier type d'anomalie est différent du second type d'anomalie.

4. Dispositif de transmission selon la revendication 3, **caractérisé en ce que**
la première unité de détection (3) est conçue pour détecter le premier type d'anomalie si, sur la base des données reçues du premier réseau (NW1), on peut déduire au moins un nouveau point de terminaison et/ou un écart par rapport à la topologie de réseau dans le premier réseau (NW1), et la seconde unité de détection (4) est conçue pour détecter le second type d'anomalie si, sur la base des données reçues du second réseau (NW2), on peut déduire au moins une attaque par le second réseau (NW2) via le second port réseau (P2) sur la seconde unité de détection (4).

5. Dispositif de transmission selon l'une des revendications 1 à 4, **caractérisé en ce que**
le dispositif de détection (1) est conçu pour recevoir les données du premier réseau (NW1) via un commutateur réseau disposé entre le premier réseau (NW1) et le premier port réseau (P1), où au moins une entrée du commutateur réseau est reliée au premier réseau (NW1) pour la transmission de données et un port d'écoute (SP) conçu comme sortie de l'interrupteur réseau est relié au premier port réseau (P1) pour la transmission de données.

6. Dispositif de transmission selon l'une des revendications 1 à 5, **caractérisé en ce que**
le dispositif de détection (1) comprend en outre une première unité centrale dans laquelle est mise en œuvre la première unité de détection (3) et une seconde unité centrale dans laquelle est mise en œuvre la seconde unité de détection (4).

7. Dispositif de transmission selon l'une des revendications 1 à 6, **caractérisé en ce que**
le dispositif de détection (1) est conçu pour fournir au second réseau (NW2) une table de routage comprenant une pluralité A d'adresses IP de membres du premier réseau (NW1).

8. Dispositif de transmission selon l'une des revendications 1 à 7, **caractérisé en ce que**
le dispositif de détection (1) est conçu en outre pour fournir au second réseau (NW2) au moins une adresse IP déterminée d'un membre déterminé du premier réseau (NW1).

9. Dispositif de transmission selon l'une des revendications 1 à 8, **caractérisé en ce que**
le dispositif de détection (1) est conçu pour effectuer une transmission de données entre le premier réseau (NW1) et le second réseau (NW2) dans une couche de liaison de données, couche 2 selon le modèle de couches OSI/ISO.

10. Dispositif de transmission selon l'une des revendications 1 à 9, **caractérisé en ce que**
la première unité de détection (3) et la seconde unité de détection (4) comprennent respectivement un système de détection d'intrusion.

11. Dispositif de transmission selon l'une des revendications 1 à 10, **caractérisé en ce que**
le premier réseau (NW1) comprend un réseau de commande, en particulier un réseau de production ou un réseau de sécurité ferroviaire, et le second réseau (NW2) comprend un réseau de diagnostic, un réseau local ou l'Internet.

12. Dispositif de transmission selon l'une des revendications 1 à 11, **caractérisé en ce que**
le dispositif de transmission (1) est conçu en tout ou partie comme une diode de données unidirectionnelle, un pare-feu ou une passerelle.

13. Dispositif de transmission selon la revendication 12, **caractérisé en ce que**
la passerelle est disposée entre la première unité de détection (3) et la seconde unité de détection (4), et une entrée de la première unité de détection (3) est reliée à un commutateur réseau externe et une sortie de la première unité de détection (3) est reliée à la passerelle, la passerelle étant en outre conçue pour communiquer avec la première unité de détection (3) via une adresse IP interne de la première unité de détection (3), une entrée de la seconde unité de détection (4) étant reliée à la passerelle et une sortie de la seconde unité de détection (4) étant reliée au second réseau (NW2).

14. Dispositif de transmission selon l'une des revendications 1 à 13, **caractérisé en ce que**
au moins la première unité de détection (3), la seconde unité de détection (4), le premier port réseau (P1) et le second port réseau (P2) sont mis en œuvre dans un boîtier commun.
